# FASCICULE DE BREVET EUROPEEN

(11) **EP 2 986 185 B1**
(45) Date de publication et mention de la délivrance du brevet: **25.04.2018**
(21) Numéro de dépôt: 14718741.3
(22) Date de dépôt: 07.04.2014
(51) Int. Cl.: A47J 31/06, A47J 31/10

(54) **DOSAGE DU CAFÉ PAR DISPOSITIFS LUMINEUX**
KAFFEEDOSIERUNG MITTELS BELEUCHTUNGSVORRICHTUNGEN
DOSING COFFEE BY MEANS OF ILLUMINATING DEVICES

(30) Priorité: 17.04.2013 FR 1300902
(43) Date de publication de la demande: 24.02.2016
(73) Titulaire: EYRIGNOUX, Jean-Claude, 19100 Brive-la-Gaillarde (FR)
(72) Inventeur: EYRIGNOUX, Jean-Claude, 19100 Brive-la-Gaillarde (FR)
(86) Numéro de dépôt international: PCT/IB2014/000507
(87) Numéro de publication internationale: WO 2014/170731

(56) Documents cités:
- WO-A1-02/15759
- DE-A1- 19 606 775

## Description

La présente innovation concerne le dosage de poudre ce café au moyen de la lumière dans tous les filtres, en papier, en fibre synthétique, de forme tronconique à fond linéaire, ou tronconique à fond plat type américains, placés dans les cafetières électriques ou porte filtres non électriques. La dite lumière issue d'une source lumineuse, étant projetée sur les faces du filtre, à travers un masque percé ou transparent des graduations à mettre en valeur. Ou la dite lumière traversant les parois transparentes du porte filtre, lequel étant alors opacifié des graduations. Ou bien au moyen de graduations lumineuses Led (Light Emetting Diodes) supportées ou incorporées dans un bloc lumineux au porte filtre.

Le but est d'offrir aux consommateurs un dispositif de dosage de la poudre de café, identique au dosage existant sur le réservoir d'eau. Le dispositif ne demande aucune intervention de la part du consommateur, par simple lecture de graduations projetées sur le filtre, ou autour des graduations opaques, la poudre de café moulu est versée directement du paquet dans le filtre, selon le nombre de tasse de café désiré.

En l'état actuel, les cafetières sont livrées avec des cuillères doseuses, en matière plastique généralement de forme conique. A l'aide de celle-ci le consommateur puise la poudre dans le paquet ou dans la puis la déverse dans le filtre ceci n'est pas pratique. Le remplissage de la cuillère est variable, le dosage s'en trouve aléatoire. De ce fait nombre de consommateurs (75 % de hommes et 50 % des femmes) ne l'utilisent pas et versent directement la poudre dans le filtre. Il en résulte que le café est trop fort ou trop faible, au final on assiste à une désaffection des cafetières à filtre. Cependant, celle-ci demeure le seul appareil capable de préparer le café en grand volume au moindre prix. Tandis que la production mondiale de café est excédentaire des populations n'ont que peu ou pas accès à cette boisson dont les avantages pour la santé sont reconnus. Certes les capsules sont une grande avancée pour des tasses à l'unité de bonne qualité, mais ces dispositifs sont aussi inadaptés pour préparer quatre ou six bols de café que la cafetière à filtre l'est pour la tasse à l'unité. De plus les tasses à la capsule, reviennent beaucoup plus chères et elles sont inaccessibles à une très grande part des populations, notamment à celle des pays les moins développés. Ces dispositifs, génèrent beaucoup de déchets, et peuvent etre mal perçus sur le plan environnemental. De plus le tonnage de café consommé par ce moyen demeure très faible.

Dans ces conditions il convient de relancer la cafetière à filtre sous toutes ses formes, notamment celles avec des filtres en papier en la dotant d'un dispositif de dosage, direct, simple et peu onéreux.

La matière première utilisée pour fabriquer les filtres en papier, est principalement la pâte à papier issu du bambou, dont la pousse est de trois ans seulement.
Le filtre papier très bon marché, il s'inscrit dans un cycle de
développement durable. La qualité de sa filtration, est reconnue imbattable, tant pour la captation des aromes, que la retenue des graisses.

Jusqu'alors, la difficulté de trouver un dispositif de dosage, provient du fait qu'il n'existe aucun moyen fiable, et économique d'imprimer des marquages sur le papier filtre et répondant aux exigences alimentaires. La présente innovation contourne cet obstacle, en proposant d'utiliser un moyen de créer des repères de dosage sans toucher au papier, sans insert dans le filtre, en ayant recours à la lumière artificielle et/ou naturelle.
En l'état de la technique actuelle, on trouve dans les brevets deux familles de réponses tous à lecture directe des graduations. La première, concerne le marquage sur le papier du filtre (brevet EP 2057923 A1)
La seconde est une série d'inserts gradués à placer dans le filtre. (brevets : DE 196 06 775 A1 ou WO 02/1579 A1).

La présente innovation, est une troisième voie inédite, elle vise à utiliser la lumière pour créer sur le filtre des images virtuelles qui sont soit les graduations elles-mêmes ou les espaces entre et autour des graduations.

Le principe est simple, par exemple, entre une source lumineuse et la paroi externe du filtre on place un masque percé des graduations. Les faisceaux lumineux traversent le masque, et projettent les graduations sur la face extérieure du filtre, elles deviennent alors très lisibles. Ou à l'inverse, la lumière traverse un porte filtre en partie ou totalement transparent sur ou dans lequel les graduations sont opaques. Dans ce second cas la surface éclairée est plus grande. Ceci est adapté pour le porte filtre manuel non électrique sur verseuse.
Pour éviter les déformations, et assurer une bonne lisibilité, le papier doit être bien plaqué contre la zone graduée de la porte filtre. Dans ce but, le porte filtre est doté à sa base et sur ses cotés d'espaces apte à recevoir, avec du jeu, les bandes de sertissage du filtre.
Le recours à la lumière d'ambiance naturelle peut être suffisant, dans certains cas. Par exemple, la lumière naturelle du soleil, ou encore l'éclairage de la cuisine, amplifié par une surface réfléchissante permet de lire la graduation sur un porte filtre non électrique. Cette configuration est des plus avantageuses pour les consommateurs des pays en développement.
Les cafetières à filtre récentes sont de plus en plus souvent équipées outre la résistance de chauffage de l'eau, d'organes électroniques, l'alimentation électrique peut au moindre frais être récupérée pour alimenter la source d'éclairage proposée pour les graduations. L'éclairage lui-même, peut être commun, à la celui de la signalétique de la cafetière et à la projection des graduations sur le filtre. Dans cette voie, les éclairages par Led offrent beaucoup de perspectives. Elles sont puissantes, faciles à installer, offrent une large palette de couleurs, ne chauffent pas, et sont bon marché.

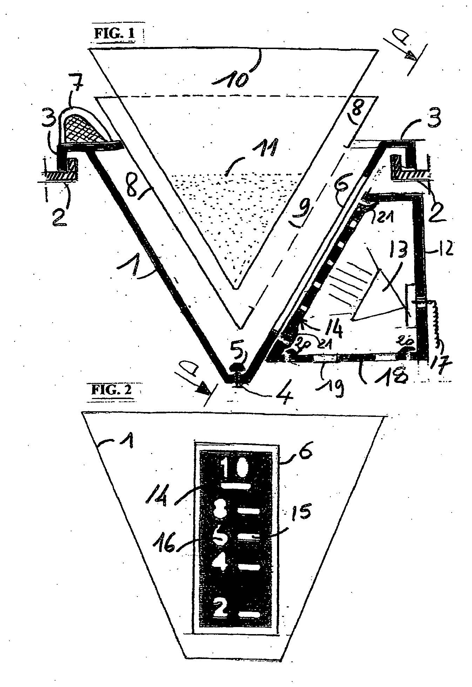

Les figures 1 à 10 montrent plusieurs modes de réalisation de l'innovation avec ses différentes caractéristiques
Selon une caractéristique, les graduations sont projetées sur le filtre à café au moyen d'au moins une source lumineuse.
Selon une autre caractéristique l'espace entre et celui qui entoure les graduations est projeté contre le filtre à café.
Selon une autre caractéristique les faisceaux lumineux sont filtrés au moyen d'un masque percé des graduations à projeter.
Inversement selon une autre caractéristique le masque transparent est doté de graduations opaques.
Selon une autre caractéristique le dosage est modulable par des masques interchangeables ou des portes filtre interchangeables.
Selon autre caractéristique les faisceaux de lumière sont filtrés au moyen d'une paroi opaque dans laquelle des graduations transparentes sont agencées.
Selon autre caractéristique les faisceaux lumineux sont filtrés au moyen d'une paroi transparente sur laquelle sont agencées des graduations opaques.
Selon autre caractéristique les faisceaux lumineux sont filtrés au moyen d'une paroi transparente dans la matière de laquelle sont agencées de graduations opaques.
Selon une autre caractéristique à une graduation transparente ou percée d'un vide, correspond au moins un niveau de dosage du café.
Selon une autre caractéristique, le dispositif permet d'obtenir plusieurs échelles de graduations, café normal, fort ou faible.

Selon d'autres caractéristiques relatives aux portes filtre :
- Le porte filtre rigide de rétention de l'eau de la percolation étanche est partiellement opaque et partiellement transparent,
- Le porte filtre rigide de la percolation est agencé avec au moins une lucarne transparente.
- Le porte filtre rigide transparent qui laisse passer la lumière est doté d'un masque opaque sérigraphie agencé sur a face extérieure du porte filtre.
- Le porte filtre rigide est réalisé par deux matières plastiques, par bi-injection, la paroi opaque, et des graduations transparentes.
- Inversement, le porte filtre rigide est réalisé en deux matières plastiques, par bi-injection, la paroi est transparente, et des graduations opaques.
- Selon une autre caractéristique, le porte filtre souple en maille de nylon comprend au moins une lucarne vide laissant le passage de la lumière.
- Selon une autre caractéristique le panier porte filtre souple est un « squelette » formé d'une structure graduations et chiffres et de vides.
- Selon une autre caractéristique, à la base du porte filtre rigide ou souple et le long de ses cotés sont agencés des espaces, aptes à loger, avec du jeu, les bandes de sertissage du filtre afin que sans pliage de celles-ci, le filtre mis en place soit bien centré et bien plaqué contre les parois de la porte filtre avant d'être déployé.
- Selon une autre caractéristique le porte filtre est doté de bandes horizontales, transparentes, alternés avec des bandes opaques, noires ou en couleur.

Une autre série de caractéristiques concerne la ou les sources lumineuses
- Tous les types de source de lumières, blanches ou de couleurs conformes aux normes électriques applicables aux cafetières sont utilisables sans aucune limitation : lampes à incandescence, fluorescence, halogène, Led (Light Emetting Diodes), de toutes formes, lampes, spots, tubes voyants, rubans, bloc lumineux, montées, par broche, vis, baïonnette.
- La source lumineuse est la lumière naturelle
- La source lumineuse est multiple, elle est la combinaison de la lumière naturelle ou artificielle.
- La lumière issue de la source lumineuse est projetée directement ou bien renvoyée par tous systèmes optiques sans limitation, diffraction, réflexion, miroir, réfraction, prismes, lentilles, loupes....
- Les dispositifs de renvoi de la lumière des formes géométriques planes ou courbes, ils sont fixes ou orientables.
- La source lumineuse est réfléchie et amplifiée par des déflecteurs.
- La cafetière est dotée d'un volume fermé, apte à recevoir une source lumineuse.
- Le volume du boc lumineux a une partie ouvrante pour changer la source lumineuse
- L'une des parois du volume est apte à recevoir un masque amovible
- Le masque est amovible il est percé par les graduations
- Le volume du bloc est partiellement ou totalement transparent et percé.
- Le masque de graduations est en en toute matière rigide, souple, opaque il est avec des évidements qui laissent passer la lumière.
- Le masque est fixe ou amovible monté sur glissières, ergots, out tout autre montage mécanique.
- Le masque est en matière transparente, un film percé des graduations et collé par-dessus.
- Le masque lumineux est peint, ou sérigraphie, fluorescent, ou revêtu par toute autre technique non limitative d'impression sur la matière transparente.
- Le masque gradué, est sur la face extérieure , incorporé dans l'épaisseur du porte filtre rigide, sur la face intérieure du porte filtre, rigide, incorporé au porte filtre souple amovible, ou bien il est déporté du porte filtre et placé sur le bloc lumineux, ou encore monté en tous points de la cafetière, socle, corps, porte filtre, pouvant être mis au contact du filtre en papier réservoir d'eau, couvercles....
- L'énergie de la source lumineuse est le secteur, par piles, ou photovoltaïque.

Une autre série de caractéristiques concerne l'allumage de la source lumineuse.
- La source lumineuse est commandée par un interrupteur indépendant de celui de la résistance électrique de mise en ébullition de l'eau, de manière à ne pas démarrer la mise en ébullition de l'eau pendant l'opération de dosage de la poudre de café.
- L'interrupteur est a double basculeur ou rotatif à deux positions avec voyant rouge de sécurité.
- L'interrupteur est du type poussoir avec effet de sécurité positive.
- Une source lumineuse unique sert à l'éclairage du masque et des voyants lumineux rouges des interrupteurs.
- L'allumage de la source est programmé, et/ou minuté.

Une autre série de caractéristique concerne les sources lumineuses Led
- Les led sont incorporées dans un bloc lumineux transparent qui supporte le masque des graduations, et il est placé en position de contact du filtre.
- Les led sont des lampes, des cordons, des bandes, elles sont blanches ou en couleurs.
- Lorsque les Led de graduations sont sur placées sur un porte filtre détachable de la cafetière, leur alimentation électrique est assurée par une prise contact support, du type utilisé pour les bouilloires électriques sans fil posées sur socle.
- Alternativement, les Led de graduations sont alimentées par des piles type alcalines placées dans un carter agencé dans le porte filtre amovible.
   La figure 1 indique en coupe, un porte filtre tronconique équipé de l'innovation.
   La figure 2, est une vue suivant a-a, du dispositif de graduation tel qu'il apparaît vu de l'intérieur du porte filtre rigide. (sans le filtre en papier).

Le corps du porte filtre rigide (1), représenté est de forme tronconique, adapté à la taille des filtres normalisés (type 4, 2 ou 6 coniques standards Melitta. Le porte filtre rigide étanche, est osé sur le corps de la cafetière sur des berceaux ponctuels ou linéaires (2) du type console, au moyen des supports (3), au fond du porte filtre se trouve le percement (4) obturé automatiquement par l'anti goutte à ressort (5). Les parois du porte filtre rigide (1) sont opaques, mais une lucarne transparente (6) est aménagée, pour le passage de faisceaux lumineux provenant de la source
lumineuse (13). Pour faciliter sa préhension lors de son extraction de la cafetière, le porte filtre (1) est dotée d'une oreille (7).
A l'intérieur du porte filtre rigide, prend place généralement un porte filtre amovible souple (8), constitué d'une ossature support et de maille plastique ou métallique, il est découpé sur une partie suivant une lucarne (9), de dimension au moins identique à la lucarne transparente (6), Ce porte filtre est soit équipé d'une anse ou d'une languette de prise en main, en vue de l'extraire facilement, et jeter le filtre papier (10)contenant la poudre de café (11) une fois la percolation terminée.
Pour la fonction dosage, outre les lucarnes (6) et (9) ajoutées aux portes filtre, un bloc lumineux (12) est ajouté ou bien agencé avec le corps de la cafetière. Ce bloc, est un volume qui abrite la source lumineuse (13), et un masque (14), percé des graduations (15) et de chiffres (16). La source lumineuse (13) est alimentée par un fil (17) lui-même connecté éventuellement à un transformateur basse tension (non représenté) logé dans le socle de la cafetière ou dans son corps et à un interrupteur avec voyant lumineux (non représenté) et fixé sur la cafetière soit sur le socle ou bien le corps de la cafetière .Le fond (18) du bloc lumineux est amovible au moyen des ergots (20), en vue d'accéder à la source lumineuse pour la remplacer. Le fond (18) est percé de trous de ventilation (19). En vue de moduler les dosages et les graduations suivant les pays, le masque (14) est interchangeable, il est accroché au bloc par des ergots (21).

Le fonctionnement de l'innovation est le suivant. Le filtre en papier est posé sans replier les bords de sertissaient (35), dans les espaces (36). Ensuite le filtre est déployé, ses parois viennent au contact du porte filtre mais pas sur la ligne de fond, ni celle de côté, il est en sustentation.
Lorsque la source lumineuse (13) est allumée au moyen de son propre interrupteur, la lumière orientée, vers la face externe du filtre en papier (10) est bloquée par le masque opaque (14) mais elle le traverse par les percements des graduations (15) et de chiffres (16), ensuite les faisceaux lumineux passent au travers de la lucarne étanche et transparente (6) puis au travers de la seconde lucarne ouverte (9) et se projette au dos du filtre papier mis en place. Après versement de l'eau dans le réservoir au nombre de tasses à préparer la poudre de café est à son tour versée directement du paquet de café moulu dans le filtre jusqu'au niveau correspondant au nombre de tasse désiré retenue pour l'eau (2 ,4 ,6 ,8 ,10).

La figure 2 indique montre un type de graduation à projeter réalisé par des par ligne de niveau en forme des tirets vides (15) et des chiffes (16). Les Ligne de niveaux peuvent, prendre toutes les formes géométriques sans limitation, rectangles, triangles pour monter une progression, cerces, escaliers. Un seul porte filtre peut recevoir plusieurs échelles de dosage.

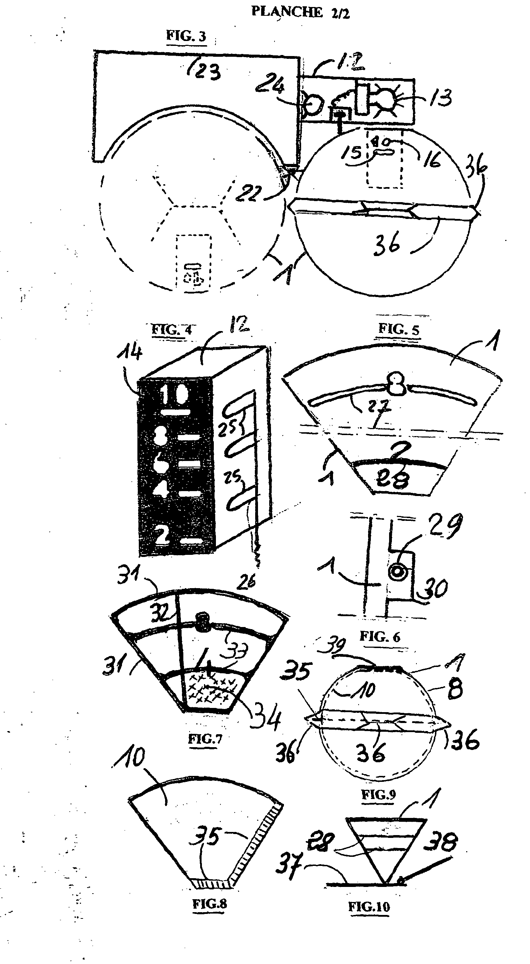

La figure 3 indique un mode réalisation de l'innovation sur une cafetière a filtre pivotant, caractérisé en ce que le bloc lumineux est à l'extérieur du corps de la cafetière à coté du réservoir d'eau.
   Dans cette configuration le porte filtre (1) pivote sur les axes (22) solidaires du corps de la cafetière. En position de percolation le porte filtre est contre le réservoir d'eau (23), en position de dosage le porte filtre (1) pivote d'environ 180°, ainsi il se dégage de la douchette d'arrivée de la vapeur, il est alors plaqué contre le bloc lumineux (12). Ce dernier est en matière transparente ou translucide. La matière translucide offre l'avantage de laisser passer la lumière tout en dissimulant les composants placés à l'intérieur. Au nombre de ces composants on trouve la source lumineuse (13), éventuellement un transformateur basse tension (24) et un interrupteur à poussoir avec voyant de sécurité lumineux rouge (25). Le regroupement de toutes ces fonctions, interrupteur, éclairage, transformation de voltage en un seul bloc, permet à la fois de créer les conditions de sécurité électriques dans un volume fermé, et réduire le prix de fabrication.
   Le porte filtre (1) est opaque tandis que les repères (15) et les chiffres (16) sont transparents, et réalisés par double injection de la porte filtre. En position de dosage, le porte filtre (1) est au contact de l'interrupteur poussoir lumineux, le contact est assuré, la lampe (13) éclaire le bloc translucide ou transparent (18), la lumière éclaire les graduations et les chiffres qui deviennent très lisibles au travers des filtre en papier ou en matière synthétique. Lorsque le porte filtre est pivoté en position de percolement, l'interrupteur (25) relâché s'ouvre et l'éclairage du bloc lumineux s'éteint.
   Dans une solution alternative non représentée, la source d'éclairage est placée derrière le réservoir d'eau (23) dont les parois sont transparentes ou translucides, en effet il suffit d'une ambiance lumineuse même de faible intensité pour rendre les graduations bien lisibles. La source est aussi placée sur le socle et dirige un flux lumineux vers le haut, ou bien elle est dans le couvercle du réservoir et dans ce cas émet un faisceau dirigé vers le bas.
La figure 4 représente une solution de bloc projecteur lumineux éclairé par des Led (25) reliées par un conducteur (26). La face au contact du porte filtre en position de dosage est munie du masque (14), qui laisse passer la lumière au travers des parties (15) et (16) .Le masque est réalisé par sérigraphie ou un film souple adhésif, ou une plaque percée, fixée au bloc. Dans cette configuration le porte filtre (1) est entièrement transparent réalisé en mono injection, il est mis au contact du bloc lumineux (18). Le même résultat est obtenu en utilisant une matière transparente pour le porte filtre rigide, revêtu d'un traitement de surface opaque, sauf au droit des graduations.
La figure 5 montres deux modes de réalisation du porte filtre. Un porte filtre (3) opaque est doté de graduations en cerces discontinues en matière transparente (27). Inversement un porte filtre (1) est doté de graduations opaques (28) également en forme de cerce continue tout autour du porte filtre.
La figure 6 montre une source lumineuse LED (29), qui incorporée à la matière du filtre (1) dans une surépaisseur (30) indique le niveau de dosage.
La figure 7 montre un mode de réalisation dans lequel porte filtre (8) est du type squelette, caractérisé en ce que ses bords (31) ses raidisseurs (32) ainsi que les lignes niveau des graduations (33), les chiffres associés en constituent l'ossature et la rigidité, Les lignes de graduation (33) sont des cerces horizontales. Ce squelette est placé dans un porte filtre étanche entièrement transparent donne la taille maximale aux graduations, équipé d'une anse il permet de retenir et manutentionner le filtre papier. Doté d'une maille filtrante (34) il est un filtre permanent.
La figure 8 montre le filtre en papier (10) non déplié, et les bordures de sertissage (35) à la base et sur le coté .Afin de bien plaquer le papier contre la paroi du porte filtre (1) représenté vue de dessus, en figure 9 ou (8) est doté à sa base et sur les côtés de renfoncements (36) dans lesquels les bandes de sertissage (largeur 10mm pour un filtre N°4 standard) viennent se loger avec un jeu de 3 mm minimum. La surface plane ou courbe (37) support des graduations en agencée en bossage (39) sur la paroi du porte filtre améliore le contact entre les deux matériaux et évite toute déformation de la projection de lumière. Ce contact est renforcé par le poids de la poudre de café qui leste le filtre en papier.
La figure 10 représente en coupe un porte filtre transparent (1) avec de sur sa face extérieure des graduations (28), dont l'embase (37) est un miroir fixe horizontal ou bien un déflecteur réfléchissant articulé (38).

## Revendications

1. Dispositif de dosage du café en poudre dans une cafetière à filtre, en papier ou en fibre synthétique de formes tronconiques ou à fond plat, **caractérisé, en ce que** les graduations du niveau de dosage sont projetées sur le filtre à café au moyen d' une source lumineuse (13) et d'un masque gradué (14).

2. Dispositif selon la revendication 1, **caractérisé en ce que** la cafetière est dotée d'une source lumineuse (13), diffusant de la lumière en direction des parois du filtre.

3. Dispositif, selon les revendications 1 à 2 **caractérisé en ce que** les faisceaux lumineux issus de la source lumineuse, traversent un masque percé par les repères de graduations(15) et le chiffres indicateurs du nombre de tasses à doser (16). Le masque est posé sur le porte filtre rigide étanche (1) ou le porte filtre souple à maille amovible (8).

4. Dispositif selon les revendications 1 à 2, **caractérisé en ce que** le porte filtre rigide (1), étanche fixe ou le porte filtre mobile souple à maille (8) comprennent au moins d'une partie transparente (6), capable de laisser traverser la projection des graduations contre le filtre papier adossé.

5. Dispositif selon les revendications 1 à 3, en ce que le porte filtre souple amovible à maille (8) est doté d'une lucarne vide (9), apte à laisser passer la projection des graduations sur le filtre en papier.

6. Dispositif selon les revendications 1 et 3, **caractérisé en ce que** chaque repère gradué (15), du masque est apte à doser une quantité de poudre de café correspondant au nombre de tasse du réservoir d'eau de la cafetière respectivement calculés en fonction de la force du café liquide désiré.

7. Dispositif, selon les revendications 1 à 3, **caractérisé en ce que** le porte filtre rigide étanche (1), fixe ou amovible et réalisé en matière plastique par mono injection en matériau entièrement ou partiellement transparent.

8. Dispositif, selon les revendications 1 à 3 **caractérisé en ce que** le porte filtre rigide (1), fixe ou amovible est réalisé en matière plastique par au moins deux injections en matériau opaque transparent. Le corps (1) étant opaque et les graduations (27) transparentes, ou inversement le corps (1) transparent et les graduations (28) opaques.

9. Dispositif, selon les revendications 1 à 4, **caractérisé en ce que** le filtre souple, amovible est réalisé en matière plastique, en à maille synthétique ou métallique comporte une zone opaque (33) recevant les graduations transparentes ou percés d'une vide laissant passer la lumière.

10. Dispositif, selon les revendications 1 à 4, et 9 **caractérisé en ce que** le masque de filtration des faisceaux lumineux sur le porte filtre rigide (1) étanche, est réalisé en pleine matière percée (27), ou bien par tout procédé d'impression, de sérigraphie, en creux en relief sur sa face non au contact du filtre en papier.

11. Dispositif, selon les revendications 1 à 4 et 9 **caractérisé en ce que** le masque de filtration des faisceaux lumineux est agencé, sur au moins une des faces du porte filtre rigide, dans l'épaisseur de matière du filtre rigide (1), sur le bloc lumineux (12), sur le filtre souple amovible (8), ou sur le corps de la cafetière (2).

12. Dispositif, selon les revendications 1 à 3 la cafetière est dotée d'un bloc (12) d'un volume apte à recevoir une source lumineuse (13), et dont les faces intérieures sont réfléchissantes, ou que la source lumineuse LED (29) est incorporée au porte filtre (1).

13. Dispositif, selon les revendications 1 et 3 la lumière naturelle ou artificielle est projetée directement ou bien renvoyée par tous systèmes optiques, fixes ou orientables sans limitation, diffraction par prisme, diffusion, réflexion miroir (37), réfraction, prismes, lentilles, déflecteur (38).

14. Dispositif selon les revendications 1, 2, et 13 autre caractéristique concerne l'allumage de la source lumineuse la source lumineuse (13) est commandée de manière indépendante de celui de la résistance.

15. Dispositif Selon les revendications 1, 2, 13 **caractérisé en ce qu'**un interrupteur unique à double contact allume la source lumineuse (13) de projection des graduations et la résistance de chauffe de la cafetière.

16. Dispositif selon les revendications 1, 2, **caractérisé en ce qu'**une source lumineuse unique sert à la fois, à l'éclairage du masque de projection des graduations et à un ou des voyants lumineux des interrupteurs des alimentations électriques

17. Dispositif selon la revendication 1 et 3 **caractérisé en ce que** la source lumineuse de projection des graduations est constitué par des LED, (26) incorporées à un bloc transparent ou translucide (12), doté d'un masque opaque 14 percé par des graduations à projeter.

18. Dispositif, selon les revendications 1 ,3 et 17, **caractérisé en ce que** le bloc transparent ou translucide (12) avec des LED incorporées (26), et comprenant un masque de projection des graduations (14) est placé soit sur corps de la cafetière ou le porte filtre rigide étanche de percolation (1)

19. Dispositif, selon les revendications 1 et 3, **caractérisé en ce que** le porte filtre avec bloc lumineux incorporé est alimenté électriquement par une prise de contact électrique par simple pose, type bouilloire électrique sans fil.

20. Dispositif, selon les revendications 1 et 2, **caractérisé en ce que** le circuit électrique d'alimentation de la source lumineuse est coupé par l'interrupteur d'allumage de la résistance de chauffe quant celle-ci est mise sous tension, ou bien par un minuteur programmable.

21. Dispositif selon les revendications let 2 **caractérisé en ce que** les sources lumineuses sont alimentées par des piles type alcalines placées dans un carter agencé dans le porte filtre amovible, ou toute autre partie de la cafetière.

22. Dispositif selon les revendications 1 et 2, 4, est **caractérisé en ce que** le contact entre filtre papier (10) et le porte filtre (1) est amélioré par les logements (36) des bandes de sertissaient (35) et du bossage (39), ce qui positionne le filtre en sustentation.

23. Dispositif selon les revendications 1 et 2, **caractérisé en ce que** le masque est un squelette constitué des ossatures (31) et (32) des graduations (33) qui doté de la maille filtrante (34) a une double fonction de masque et de filtre permanent.

24. Dispositif selon les revendications 1, 2, 4, 8 et 10 est **caractérisé en ce que** les repères de graduations (15), (27) (28) et (33) peuvent prendre toutes les formes géométriques, de couleurs, tirets, cerces, triangles, bandes, le tout dans plusieurs échelles de graduations selon la force du café et les pays.

## Patentansprüche

1. Vorrichtung zum Messen von pulverförmigem Kaffee in einer Kaffeemaschine mit einem Filter aus Papier oder aus Kunstfasern mit kegelstumpfförmigen Formen oder mit flachem Boden, wobei die Abstufungen der Meßhöhe mittels einer Lichtquelle (13) und eine abgestufte Maske (14).

2. Vorrichtung nach Anspruch 1, wobei die Kaffeemaschine mit einer Lichtquelle (13) ausgestattet ist, die Licht in Richtung der Wände des Filters streut.

3. Vorrichtung nach Anspruch 1-2, bei der die von der Lichtquelle kommenden Lichtstrahlen durch eine Maske laufen, die mit Teilstrichen (15) und Ziffern versehen ist, die Anzahl der zu messenden Becher (16) angeben, und die Maske flüssigkeitsdicht angeordnet ist starrer Filterhalter (1) oder der abnehmbare flexible Filterhalter (8).

4. Vorrichtung nach Anspruch 1-2, bei der feste flüssigkeitsdichte steife Filterhalter (1) oder der bewegliche flexible Filterhalter (8) mindestens einen transparenten Teil (6) aufweist, der die Projektion der Abstufungen durchlassen kann gegen den angrenzenden Papierfilter.

5. Vorrichtung nach Anspruch 1-3, bei der entfernbare Filterhalter (8) aus flexiblem Netz mit einem Spalt (9) versehen ist, der es ermöglicht, dass die Vorsprünge der Abstufungen auf den Papierfilter durchgehen.

6. Vorrichtung nach Anspruch 1 und 3, wobei jede abgestufte Markierung (15) der Maske eine Menge an Kaffeepulver messen kann, die der Anzahl von Bechern des Wasserreservoirs der Kaffeemaschine entspricht, berechnet auf der Basis der Stärke des gewünschten flüssigen Kaffees.

7. Vorrichtung nach Anspruch 1-3, wobei der flüssigkeitsdichte starre Filterhalter (1), fest oder entfernbar, aus Kunststoffmaterial durch einmaliges Einspritzen von vollständig oder teilweise transparentem Material hergestellt ist.

8. Vorrichtung nach Anspruch 1-3, wobei der starre Filterhalter (1), fest oder abnehmbar, aus Kunststoffmaterial durch mindestens zwei Injektionen aus durchsichtigem und undurchsichtigem Material hergestellt ist, wobei der Körper (1) opak und die Abstufungen (27) transparent sind. oder umgekehrt der Körper (1) transparent und die Abstufungen (28) undurchsichtig.

9. Vorrichtung nach Anspruch 1-4, wobei der entfernbare flexible Filter aus einem Kunststoffmaterial oder aus einem synthetischen oder metallischen Geflecht hergestellt ist und eine lichtundurchlässige Zone (33) aufweist, die die Abstufungen aufweist, die transparent oder perforiert sind mit einem Hohlraum, der das Licht durchlässt.

10. Vorrichtung nach Anspruch 1-4 und 9, wobei die Maske zum Filtern der Lichtstrahlen auf dem flüssigkeitsdichten steifen Filterhalter (1) aus perforiertem festem Material (27) oder auch durch irgendein Druckverfahren, Siebdruck, vertieft oder angehoben ist sein Gesicht, das nicht in Kontakt mit dem Papierfilter ist.

11. Vorrichtung nach Anspruch 1-4 und 9, wobei die Maske zum Filtern der Lichtstrahlen auf mindestens einer der Seiten des starren Filterhalters in der Materialstärke des starren Filters (1) auf der Lichteinheit (12) angeordnet ist. , auf dem abnehmbaren flexiblen Filterhalter (8) oder auf dem Körper der Kaffeemaschine (2).

12. Vorrichtung nach Anspruch 1-3, wobei die Kaffeemaschine mit einer Einheit (12) mit einem Raum versehen ist, der eine Lichtquelle (13) aufnehmen kann und deren Innenflächen reflektierend sind oder in die eine LED-Lichtquelle (29) eingebaut ist der Filterhalter (1).

13. Vorrichtung nach Anspruch 1 und 3, wobei natürliches oder künstliches Licht direkt projiziert oder von irgendwelchen optischen Systemen reflektiert wird, die fest oder einstellbar sind, ohne Einschränkung, Beugung durch Prisma, Diffusion, Spiegel (37) Reflexion, Brechung, Prismen, Linsen oder ein Deflektor (38).

14. Vorrichtung nach Anspruch 1, 2, und 13 wobei die Aktivierung der Lichtquelle unabhängig von der des Widerstands gesteuert wird.

15. Vorrichtung nach Anspruch 1,2,13 wobei ein einzelner Schalter mit Doppelkontakt die Lichtquelle (13) zum Projizieren der Abstufungen aktiviert und den Heizwiderstand der Kaffeemaschine aktiviert.

16. Vorrichtung nach Anspruch 1,2, wobei eine einzige Lichtquelle sowohl für die Beleuchtung der Maske zur Projektion der Abstufungen als auch für ein Lichtindikatorsignal oder Signale der Schalter für elektrische Energie verwendet wird.

17. Vorrichtung nach Anspruch 1 und 3, wobei die Lichtquelle zum Projizieren der Abstufungen aus LEDs (26) besteht, die in einer transparenten oder transluzenten Einheit (12) eingebaut sind, die mit einer opaken Maske (14) ausgestattet ist, die mit den Abstufungen zu perforiert ist projiziert werden.

18. Vorrichtung nach Anspruch 1,3 und 17, wobei die durchsichtige oder durchscheinende Einheit (12) mit eingebauten LEDs (26) und mit einer Maske zum Projizieren der Abstufungen (14) entweder auf dem Körper der Kaffeemaschine oder dem flüssigkeitsdichten steifen Brühfilter angeordnet ist Halter (1).

19. Vorrichtung nach Anspruch 1 und 3, wobei der Filterhalter mit eingebauter Leuchteinheit elektrisch durch eine elektrische Kontaktverbindung durch einfaches Anordnen wie ein kabelloser elektrischer Wasserkocher mit Energie versorgt wird.

20. Vorrichtung nach Anspruch 1 und 2, bei der die elektrische Schaltung zum Betreiben der Lichtquelle durch den Schalter zum Einschalten des Heizwiderstandes beim Einschalten oder durch einen programmierbaren Zeitgeber abgeschaltet wird.

21. Vorrichtung nach Anspruch 1 und 2, bei der die Lichtquellen durch Alkali-Batterien gespeist werden, die in einem Gehäuse angeordnet sind, das in dem entfernbaren Filterhalter oder irgendeinem anderen Teil der Kaffeemaschine vorgesehen ist.

22. Vorrichtung nach Anspruch 1, und 2 ,4 wobei der Kontakt zwischen dem Papierfilter (10) und dem Filterhalter (1) durch die Schlitze (36) für die gequetschten Streifen (35) und für den Vorsprung (39) verbessert ist, der den Filter positioniert Suspension.

23. Vorrichtung nach Anspruch 1 und 2, bei der die Maske ein Skelett ist, das aus Gerüsten (31) und (32) für die Abstufungen (33) besteht, die, ausgestattet mit einem Filtergitter (34), eine Doppelfunktion aus Maske und permanentem Filter haben.

24. Vorrichtung nach Anspruch 1,2,4,8, und 10 wobei die Teilungsmarkierungen (15), (27), (28) und (33) beliebige geometrische Formen annehmen können, mit Farben, Strichen, Ringen, Dreiecken oder Bändern, alle in mehreren Skalenabstufungen abhängig von der Stärke des Kaffees und des Landes.

## Claims

1. Device for measuring powdered coffee into a coffee maker having a filter made of paper or of synthetic fiber with truncated cone shapes or having a flat bottom, wherein the graduations of the measuring level are projected on the coffee filter by means of a light source (**13**) and a graduated mask (**14**).

2. Device according to claim 1, wherein the coffee maker is equipped with a light source (**13**) that diffuses light in the direction of the walls of the filter.

3. Device according to claim 1, and 2 wherein the light beams coming from the light source pass through a mask perforated with graduation marks (**15**) and numerals indicating the number of cups to be measured (**16**), and the mask is placed on the liquid-tight rigid filter holder (**1**) or the removable flexible mesh filter holder (**8**).

4. Device according to claim 1-2, wherein the fixed liquid-tight rigid filter holder (**1**) or the movable flexible mesh filter holder (**8**) comprises at least one transparent part (**6**) that is capable of allowing the projection of the graduations to pass through against the adjacent paper filter.

5. Device according to claim 1-3, wherein the removable flexible mesh filter holder (**8**) is provided with a gap (**9**) that can allow the projection of the graduations to pass through onto the paper filter.

6. Device according to claim 1, wherein each graduated mark (**15**) of the mask can measure an amount of coffee powder corresponding to the number of cups of the water reservoir of the coffee maker, calculated respectively based on the strength of the desired liquid coffee.

7. Device according to claim 1 and 3, wherein the liquid-tight rigid filter holder (**1**), fixed or removable is made of plastic material by single injection of entirely or partially transparent material.

8. Device according to claim 1-3, wherein the rigid filter holder (**1**), fixed or removable is made of plastic material by at least two injections of transparent and opaque material, the body (**1**) being opaque and the graduations (**27**) being transparent, or conversely the body (**1**) transparent and the graduations (**28**) opaque.

9. Device according to claim 1-4, wherein the removable flexible filter is made of a plastic material or of synthetic or metallic mesh, has an opaque zone (**33**) receiving the graduations that are transparent or perforated with a void allowing the light to pass through.

10. Device according to claim 1, wherein the mask for filtering the light beams on the liquid-tight rigid filter holder (**1**) is made of perforated solid material (**27**) or else by any printing process, screenprinting, recessed, or raised on its face that is not in contact with the paper filter.

11. Device according to claims 1-4 and 9 , wherein the mask for filtering the light beams is configured on at least one of the faces of the rigid filter holder, in the thickness of material of the rigid filter (**1**), on the light unit (**12**), on the removable flexible filter holder (**8**), or on the body of the coffee maker (**2**).

12. Device according to claims 1-3, wherein the coffee maker is equipped with a unit (**12**) with a space able to accommodate a light source (**13**), and whose inside faces are reflective, or that an LED light source (**29**) is incorporated into the filter holder (**1**).

13. Device according to claim 1 and3, wherein natural or artificial light is projected directly or else reflected by any optical systems, fixed or adjustable, without limitation, diffraction by prism, diffusion, mirror (**37**) reflection, refraction, prisms, lenses, or a deflector (**38**).

14. Device according to claim 1,2 and 13, wherein the activation of the light source is controlled independently from that of the resistor.

15. Device according to claim 1 wherein a single switch with dual contact activates the light source (**13**) for projecting the graduations and activates the heating resistor of the coffee maker.

16. Device according to claim 1,2, wherein a single light source is used both for the illumination of the mask for projecting the graduations and for a light indicator signal or signals of the switches for electric power.

17. Device according to claim 1, and 3 wherein the light source for projecting the graduations consists of LEDs (**26**) that are incorporated into a transparent or translucent unit (**12**), which is equipped with an opaque mask (**14**) that is perforated with the graduations to be projected.

18. Device according to claim 1,4 and 17, wherein the transparent or translucent unit (**12**) with incorporated LEDs (**26**) and comprising a mask for projecting the graduations (**14**) is placed either on the body of the coffee maker or the liquid-tight rigid brewing filter holder (**1**).

19. Device according to claim 1 and 3, wherein the filter holder with incorporated light unit is powered electrically by an electric contact connection by simple placement, like a cordless electric kettle.

20. Device according to claim 1, wherein the electric circuit for powering the light source is cut off by the switch for turning on the heating resistor when it is powered up, or else by a programmable timer.

21. Device according to claim 1 and 2, wherein the light sources are powered by alkaline-type batteries placed in a housing provided in the removable filter holder or any other part of the coffee maker.

22. Device according to claim 1, wherein the contact between paper filter (**10**) and the filter holder (**1**) is improved by the slots (**36**) for the crimped strips (**35**) and for the protrusion (**39**), which positions the filter in suspension.

23. Device according to claim 1 and 2, wherein the mask is a skeleton consisting of frameworks (**31**) and (**32**) for the graduations (**33**) that, equipped with a filtering mesh (**34**), have a dual function of mask and permanent filter.

24. Device according to claim 1,2,4,8 and 10 wherein the graduation marks (**15**), (**27**), (**28**) and (**33**) can take on any geometric shapes, with colors, dashes, hoops, triangles, or bands, all in several scales of graduations depending on the strength of the coffee and the country.
